# EUROPEAN PATENT SPECIFICATION

(11) **EP 3 470 544 B1**
(45) Date of publication and mention of the grant of the patent: **30.06.2021**
(21) Application number: 18198726.4
(22) Date of filing: 04.10.2018
(51) Int. Cl.: C23C 4/11, C23C 4/134, C23C 4/02, C23C 28/00, C23C 28/04

(54) **METHOD FOR APPLYING THERMAL BARRIER COATINGS**
VERFAHREN ZUM AUFBRINGEN EINER WÄRMEDÄMMSCHICHT
PROCÉDÉ D'APPLICATION D'UNE COUCHE D'ISOLATION THERMIQUE

(30) Priority: 11.10.2017 US 201762570855 P
(43) Date of publication of application: 17.04.2019
(73) Proprietor: Raytheon Technologies Corporation, Farmington, CT 06032 (US)
(72) Inventor: HAZEL, Brian T., Avon, CT Connecticut 06001 (US); LIU, Xuan, Glastonbury, CT Connecticut 06033 (US); WESSELS, Kaylan M., West Hartford, CT Connecticut 06119 (US); ZALESKI, Elisa M., Manchester, CT Connecticut 06040 (US); JACKSON, R. Wesley, Groton, CT Connecticut 06340 (US)
(74) Representative: Dehns

(56) References cited:
- US-A1- 2011 003 084
- US-A1- 2013 156 958
- Leszek Latka Latka ET AL: "Buildup mechanisms of suspension plasma sprayed ZrO2 + 8 wt. % Y2O3 coatings", , 1 September 2011 (2011-09-01), XP055519511, Conference ITSC 2011 Retrieved from the Internet: URL:https://www.researchgate.net/profile/L ech_Pawlowski/publication/236647565_Buildu p_mechanisms_of_suspension_plasma_sprayed_ ZrO_2_8_wt_Y_2_O_3_coatings/links/00b7d518 a5bc2b1e67000000/Buildup-mechanisms-of-sus pension-plasma-sprayed-ZrO-2-8-wt-Y-2-O-3- coatings.pdf [retrieved on 2018-10-26]
- M. VICENT ET AL: "Effect of the initial particle size distribution on the properties of suspension plasma sprayed Al2O3-TiO2 coatings", SURFACE AND COATINGS TECHNOLOGY, vol. 268, 1 April 2015 (2015-04-01), pages 209-215, XP055519502, AMSTERDAM, NL ISSN: 0257-8972, DOI: 10.1016/j.surfcoat.2014.12.010

## Description

### BACKGROUND

The disclosure relates to gas turbine engines. More particularly, the disclosure relates to thermal barrier coatings for gas turbine engines.

Gas turbine engine gaspath components are exposed to extreme heat and thermal gradients during various phases of engine operation. They are also exposed to the mechanical action of the gas flow and to chemical reaction from combustion gas and entrained matter. In particular, gas turbine engine combustor and turbine components are exposed to extreme heat during engine operation. Exemplary such hot section components include combustor panels, vanes, blades, air seals, and the like. Thermal-mechanical stresses and resulting fatigue contribute to component failure. Significant efforts are made to cool such components and provide thermal barrier coatings (TBC) to improve durability.

Exemplary hot section components comprise metallic substrates formed of nickel and/or cobalt-based superalloy. Exemplary thermal barrier coating systems include a bond coat (e.g., metallic and having one or more layers) and a ceramic barrier coat (having one or more layers). An exemplary system includes an MCrAlY bond coat (where M identifies one or more of Fe, Ni, and Co, e.g., air plasma sprayed (APS), low pressure plasma sprayed (LPPS), or cathodic arc deposited). Exemplary barrier coatings include yttria-stabilized zirconia (YSZ) and/or gadolinia-stabilized zirconia (GSZ (also known as GdZ)) (e.g., air plasma sprayed (APS) or electron beam physical vapor deposited (EB-PVD)). Prior to and while the barrier coating is being deposited, a thermally grown oxide (TGO) layer (e.g., alumina) may form atop the bond coat layer. As time-at-temperature and the number of cycles increase, this TGO interface layer grows in thickness. An exemplary YSZ is 7 weight percent yttria-stabilized zirconia (7YSZ).

Exemplary barrier coatings are applied to thicknesses of 0.025-1.0mm (1-40 mils) and can contribute to a temperature reduction of up to 167 °C (300 °F) at the base metal. This temperature reduction translates into improved part durability, higher turbine operating temperatures, and improved turbine efficiency.

Especially when used in sandy desert environments, engine components are subject to a particular form of fouling/damage known as molten sand attack or CMAS. CMAS is an abbreviation for "calcium-magnesium-aluminum-silicon (silicate)". Specific CMAS oxides include CaO, MgO, Al₂O₃, and SiO₂. CMAS components may form a eutectic with a relatively low melting point (e.g., approximately 1240°C). The molten CMAS material infiltrates into porous coatings (e.g., between the columns of columnar ceramic). This can alter the chemical composition of the coating and/or cause structural failure of the coating. Efforts to address CMAS have centered on improved barrier coatings. For example, US patents 5,660,885, 5,871,820, 5,914,189, 6,720,038, 6,627,323, 6,465,090, 7,722,959, 7,785,722, and 9,139,897 all reference coatings relative to CMAS .

CMAS is a particular problem for columnar structures. Columnar structures have advantages of accommodating differential thermal expansion of the substrate. However, CMAS infiltration into inter-column spaces defeats that accommodation. Vapor deposition (e.g., electron beam physical vapor deposition (EB-PVD)) typically forms a columnar microstructure. Alternatively, depending more on parameters, suspension plasma spray (SPS) may also produce a columnar microstructure. In EB-PVD, the columns themselves are each composed of a single crystal with a preferred growth orientation. In SPS, each column is composed of a series of deposited particles that agglomerate into a column shape. Various of the aforementioned patents perform surface treatments (e.g., machinings or sealant coatings) to hinder CMAS accumulation and infiltration.

SPS is a lower cost method to create columnar structured TBC than EB-PVD for several reasons including equipment cost and speed. However, SPS has detriments. One SPS detriment is due to the relatively high inter-column porosity (e.g., 10% or more as measured by image analysis of 250x scanning electron backscatter images and summing individual porosity that exceeds 2 micrometers square area) and relatively large inter-column gaps (e.g., about 10 micrometers on average) thus being more susceptible to CMAS infiltration. These detriments occur even with a gadolinium zirconate (gadolinia-stabilized zirconia (GSZ)) which has been shown to react beneficially with CMAS in the EB-PVD structure.

Other SPS detriments are because the intra-column structure contains higher porosity than EB-PVD. This includes porosity at inter-pass boundaries. It also includes as-sprayed porosity and quench related defects (e.g. cracking) between individual splats in a given pass. Under certain conditions, the intra-column defects in SPS may lead to horizontal boundaries or cracks. This leads to lower column toughness relative to EB-PVD. Lower toughness means more susceptibility to damage whether by erosion, impact, or other cause.

Prior art includes US 2011/003084 A1, Leszek Latka Latka ET AL: "Buildup mechanisms of suspension plasma sprayed ZrO2 + 8 wt. % Y2O3 Coatings", M. Vicent ET AL: "Effect of the initial particle size distribution on the properties of suspension plasma sprayed Al2O3-TiO2 Coatings" and US 2013/156958 A1.

### SUMMARY

One aspect of the disclosure involves a method as claimed in claim 1.

Various embodiments may include the bimodal distribution being in a common body of powder (e.g., a single source (e.g., hopper) rather than being fed from two different sources of different size distributions).

Various embodiments may include the first layer having a thickness of 50 micrometers to 1000 micrometers.

Various embodiments may include the bimodal distribution comprising by weight: at least 42.9% at or below 0.818 micrometer; at least 13.5% above 1.156 micrometer; and no more than 27.2% between 0.818 micrometer and 1.156 micrometer.

Various embodiments may include the bimodal distribution comprising by weight: at least 45.7% at or below 0.818 micrometer; at least 21.0% above 1.156 micrometer; and no more than 24.6% between 0.818 micrometer and 1.156 micrometer.

Various embodiments may include applying a bond coat to the substrate prior to said spraying.

Various embodiments may include applying a top coat after said spraying.

Various embodiments may include the at least one additional ceramic layer being characterized by higher porosity than the ceramic layer.

Various embodiments may include pre-blending the ceramic powder from at least two different size distributions.

Various embodiments may include the substrate having an airfoil, the airfoil having a leading edge, a trailing edge, a pressure side, and a suction side.

Various embodiments may include the blending and the suspension plasma spraying being performed iteratively to balance powder behavior of gas-flow trajectories of smaller particles and ballistic trajectories of larger particles and limit sensitivity to compositional variations.

Various embodiments may include the blending being a blending of suspensions of the respective powders or a blending of the respective powders prior to forming the suspension.

### BRIEF DESCRIPTION OF THE DRAWINGS

FIG. 1 is a view of a gas turbine engine turbine vane.
FIG. 2 is a partial sectional view of an airfoil of the gas turbine engine turbine vane, taken along line 2-2 of FIG. 1.
FIG. 2A is an enlarged view of a coating on the airfoil of FIG. 2.
FIG. 3 is a sectional photomicrograph of a coating system.
FIG. 3A is an enlarged view of the coating system of FIG. 3.
FIG. 4 is a plot of measured particle size distribution for a first source powder of coarse mean particle size, a second source powder of fine mean particle size, and their resulting blend (50:50 mix). The X axis is size in micrometers and the Y axis is volumetric percent.

Like reference numbers and designations in the various drawings indicate like elements.

### DETAILED DESCRIPTION

As is discussed further below, U.S. Patent Application 15/699,260, "CMAS-RESISTANT THERMAL BARRIER COATING AND METHOD OF MAKING A COATING THEREOF", filed September 8, 2017 (the '260 application) discloses tight columnar microstructures for CMAS resistance. The inter-column boundaries of the schematically illustrated embodiment is formed by connected porosity bands and cracks. However, as is discussed below, an example of this structure may be obtained by using a blend of different powder sizes to form a broader size distribution. The resulting sprayed structure may have column boundaries formed by a mix of connected porosity bands and cracks which are very tight (small in transverse dimension or width). The structure may also have high intra-column density (particularly low in inter-pass porosity). The columnar structure may be of the entire ceramic in a TBC or may be one layer in a multi-layer TBC.

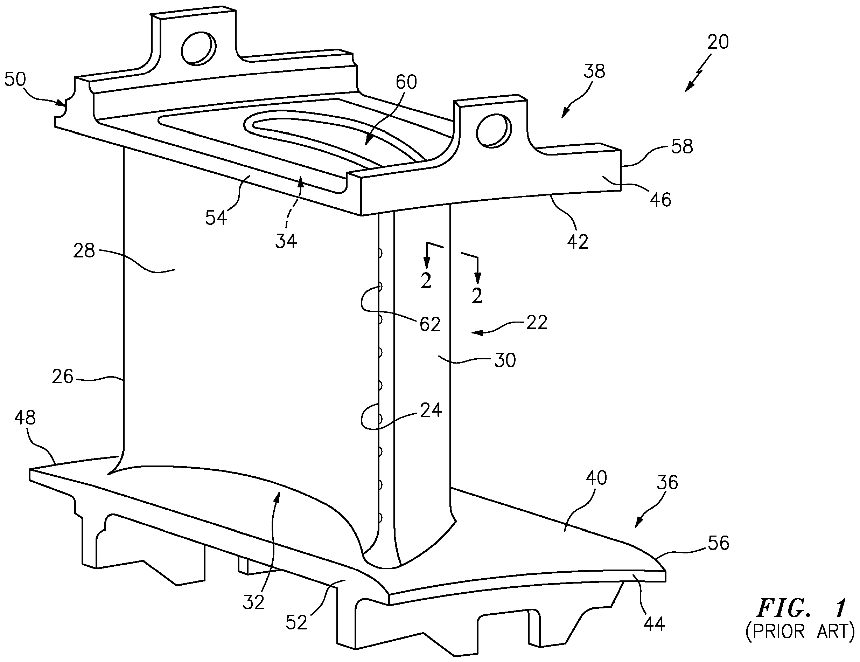

As one generic example of an article, FIG. 1 shows a coated metallic article 20 as a vane such as used in a gas turbine engine (broadly inclusive of turbojets, turboshafts, turbofans, industrial gas turbines (IGT), and the like). The exemplary vane 20 is a singlet having a single airfoil 22. Alternative vanes may be clusters. Alternative articles may include blades, fuel nozzle guides, combustor panels, blade outer air seals (BOAS), and the like.

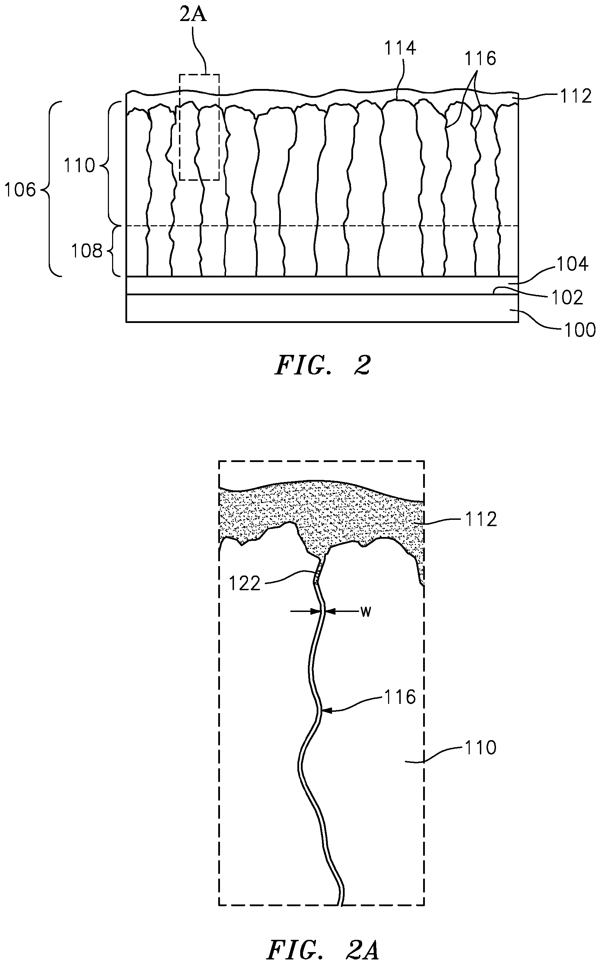

As is discussed further below, the airfoil has a leading edge 24 and a trailing edge 26. A pressure side 28 and a suction side 30 extend streamwise between the leading edge and the trailing edge (*see also,* FIG. 2). Spanwise, the airfoil extends radially outward (in the context of the engine in which it is to be installed) from an inboard end 32 to an outboard end 34.

With the exemplary vane, the inboard end is at an inner diameter (ID) platform or shroud 36 and the outboard end is at an outer diameter (OD) platform or shroud 38. The ID platform and OD shroud have respective gaspath-facing surfaces 40 and 42 (an OD surface of the ID platform and an ID surface of the OD shroud). Alternative, so-called "cantilever" vanes have no ID platform. Rather, their airfoils have ID tips.

Each of the ID platform 36 and OD shroud 38 extend from a respective forward/upstream end 44, 46 to a respective aft/downstream end 48, 50 and have respective first circumferential ends 52, 54 and second circumferential ends 56, 58. The circumferential ends may bear slots (not shown) for mounting seals so that the first adjacent circumferential end of one platform or shroud seals to the second adjacent circumferential end of the next. Additionally, the platforms may have mounting features and other structures.

Furthermore, the exemplary vane is a cooled vane having a cooling passageway system with one or more inlets and one or more outlets. An exemplary inlet 60 is shown along the outboard surface of the OD shroud 38. Outlets (for discharging cooling air) may include leading edge holes 62 and trailing edge holes (e.g., the latter forming a trailing edge discharge slot). Additional holes may be located along the pressure and/or suction sides. The various holes may extend from one or more spanwise cavities.

The exemplary article basic substrate is cast (such as via an investment casting process). The exemplary substrate material is a nickel-based superalloy. The substrate may be machined to leave a surface 102 and may be subject to one or more additional processing steps including but not limited to thermal processing (e.g., heat treatments) and mechanical processing (e.g., peening). In this first example of a manufacturing process, the bond coat is then applied along the exterior of the airfoil and gaspath-facing surfaces of the platform and shroud. As is discussed below, the TBC may then be applied.

FIG. 2 shows a metallic substrate 100 of the article 20 having an external surface 102 (e.g., along the pressure or suction side of the airfoil or one of the gaspath-facing surfaces of the platform or shroud). In an exemplary coating system, a bond coat 104 is atop the surface 102 and a thermally grown oxide (TGO) (not shown) may be atop the bond coat. There may be various inter-diffusions as well. A multi-layer ceramic barrier coat 106 is atop the bond coat and includes a layer 108 atop the bond coat and a columnar outer layer 110 atop the base layer. In yet further embodiments, there may be additional layers (e.g., such as sealing coats) a top layer 110 or the like.

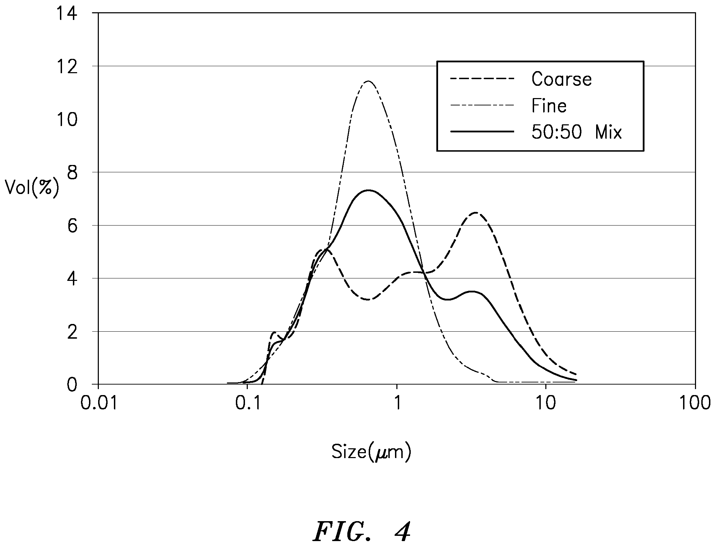

As is discussed further below, FIG. 2 also shows the presence of in-service CMAS accumulation 112 along the external surface 114 of the layer 110 and possibly infiltrating at least partially into intra-column boundaries/gaps 116. As is discussed further below, the boundaries/gaps are narrow to reduce infiltration relative to columnar structures sprayed from a baseline powder. An exemplary baseline powder is the fine powder of FIG. 4 which has a relatively narrow size distribution. It is also a very unimodal distribution. As is discussed below, the baseline has little content in a larger particle size range that is dominated by ballistic behavior during spray.

FIG. 2A shows precipitate 122 that may form at terminal portions of the boundary/gaps 116 and resulting from the chemical interaction of the slightly infiltrating CMAS with the material of the layer 110. Such precipitate will form depending on coating chemistry, not likely with YSZ but likely with gadolinia-containing coatings among others.

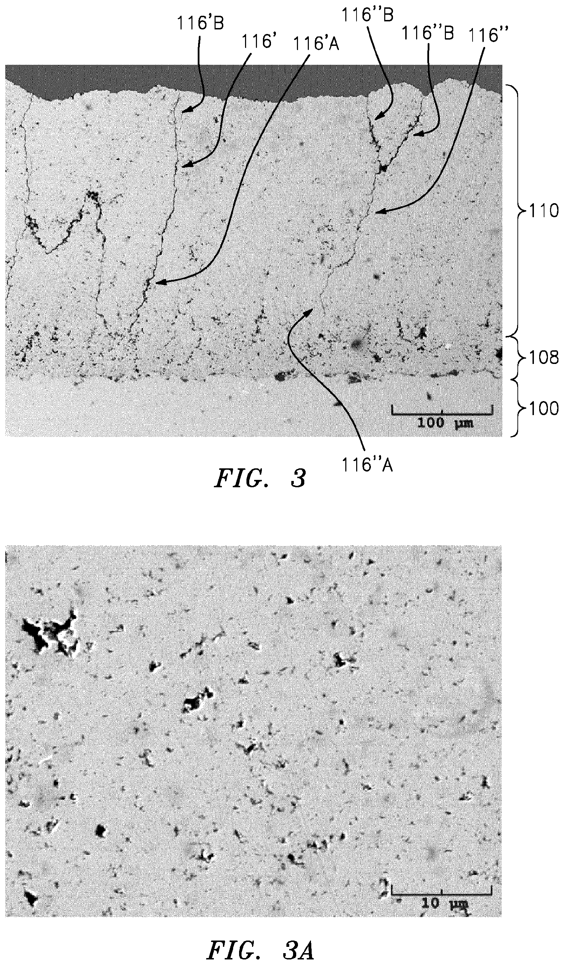

FIG. 3 shows the hybrid nature in one example of a coating wherein the layer 110 is applied using suspension plasma spray (SPS) of a modified distribution of particles shown in FIG. 4. The modified distribution was achieved by blending the baseline fine powder with a coarser powder to broaden the size distribution. A particular chemistry of FIG. 3 is discussed below. The boundaries/gaps may be formed by a mixture of connected porosity bands and cracks. However, the two need not be distinct. For example, FIG. 3 shows one gap 116' having a lower portion 116'A appearing as a porosity-based gap but an upper portion 116'B appearing as a crack. In a reverse of this, a second boundary/gap 116'' has a lower portion 116''A appearing primarily as a crack and a bifurcated upper portion 116''B appearing more as a porosity-based gap. The distinction between porosity gaps and cracks at the surface is, as shown in the '260 application, reflected in a recess at the surface of the porosity-based gap versus none in the crack.

FIG. 3A shows intra-column microstructure in the layer 110. Although there is slight porosity, the structure appears essentially anisotropic. The anisotropic structure is distinguished from layered structures with bands of enhanced porosity between layers. For example, the layers may be represented by the splats of each pass of the coating process and the porosity may be heavily biased toward inter-pass porosity. Such concentration of porosity can increase CMAS infiltration, compromise structural integrity, and promote spallation.

The intra-column microstructure is also relatively dense. For example, it may have porosity up to 5.0%, more narrowly 0.5% to 5.0% or up to 3.0 % or 0.5% to 3.0%.

FIG. 3 also shows good bonding between the narrow distribution base layer 108 and the broader distribution layer 110. The exact interface is difficult to perceive and itself is not characterized by a clear weakening band of porosity.

The dynamics of the broader distribution are believed to result from the different behavior of different size particles. For a given particle size, the remaining parameters of the suspension (carrier and concentration) in combination with the plasma parameters create a defined droplet size when the suspension is injected into the plasma which leads to a certain molten ceramic size projected at the target surface. The traditional columnar structure is produced from a unimodal system with a D50 particle size of about 0.5 micrometers wherein the droplets are sufficiently fine that a significant portion of them are dominated by the plasma gas flow motion and impact the target surface at oblique angles. This oblique angle deposition is the believed mechanism that causes columns to form.

Finer particles have higher surface area and increase viscosity and/or surface tension of the suspension which results in larger droplet sizes (and ceramic size directed at the surface). Coarser particles have similar viscosity/surface tension in the suspension but have more ceramic volume/mass per droplet size again resulting in larger ceramic size directed at the surface.

For example a baseline coating produced from a powder with a D50 of about 0.56 micrometers has 20.3% total porosity (measured by image analysis of backscattered electron micrographs at 250x magnification) and 7.0% fine (pores of <2 micrometers square) porosity. Shifting to a finer 0.240 micrometer D50 yields 14.2% and 4.9%. Shifting to a coarser 2.63 micrometer D50 yields 3.6% and 3.4%.

Other methods like changing the solvent can also impact viscosity/surface tension further. These larger ceramic sizes result in more ballistic trajectories when impacting the surface as they have more momentum and are harder to deflect with the plasma gases. This drives a denser structure with less gap definition. Vertically cracked structures can be generated this way. Also, near 100% dense structures may be generated with coarser particles with a tight control on distribution and entrainment in the plasma.

In creating a broader distribution mixture, one particle distribution is selected to form larger ceramic sizes in the flame and the other is selected to form smaller ceramic sizes in the flame when co-sprayed. This forms a structure that has tighter connected porosity bands and cracks and has higher intra-column density (particularly reduced in inter-pass porosity layers).

Variables that may be manipulated include: mean particle size and distribution width of both individual distributions; the ratio of particles; and whether the particles are incorporated into the same suspension and sprayed or co-sprayed as independent suspensions.

Example 1 (FIG. 3): layer 110 formed from 50vol% of suspension with a coarse powder of D10/50/90 = 0.25/1.41/5.14 micrometers 7YSZ at 25 weight percent solids loading in ethanol and 50vol% of second suspension with a fine powder of D10/50/90 = 0.26/0.57/1.19 micrometers 7YSZ also at 25 weight percent solids loading in ethanol blended together prior to spraying. Final coating thickness was 240 micrometers.

The coarse powder had a particle size distribution shown in FIG. 4. This was ordered from a vendor by requesting a D50 of 1.5 micrometers and expecting a unimodal distribution with a modal value close to the mean. Instead, an essentially bimodal distribution was provided having a respective lower and higher diameter modes of about 0.3 micrometer and 2.0 micrometers.

The result of blending the fine powder and coarse powder is to broaden the distribution to provide sufficient amounts of powder with the two respective dynamics described above (gas-flow trajectories of smaller particles and ballistic trajectories of larger particles).

With further optimization to create a more bimodal distribution, the distributional trough may span the particle size where behavior transitions between the two dynamics. This helps ensure a stable desired balance of the two dynamics because powder manufacturing tolerances and spray process parameter tolerances are unlikely to cause a significant shift of the fraction of powder behaving with the respective dynamics.

While the FIG. 3 test sample was processed without a bond coat, alternative implementations would likely include the bond coat. Nevertheless, the FIG. 3 representation reflects an accurate depiction of the as deposited ceramic in the corresponding embodiment with bond coat. Adding a bond coat in the sample would merely serve to facilitate long term testing.

In the particular FIG. 3 example, the base layer 108 was applied via suspension plasma spray of a narrow unimodal distribution of 7YSZ powder (essentially the fine material from FIG. 4). The particular powder particle distribution was the fine powder of the layer 110 having D10/50/90 particle size of 0.26/0.57/1.19 micrometers. As with the layer 110, the suspension plasma spray used an ethanol liquid carrier with 25 weight percent solids loading. The layer 108 was applied to a thickness of approximately 50 micrometers.

The overall resulting blend of the coarse powder and the fine powder had a broader, slightly bimodal distribution when compared to the fine powder, with breadth spreading to the coarse end.

Relative to an alternative narrow distribution spray of the layer 110, the broader distribution spray may have one or more advantages. Relative to a spray of fine powder, the broader distribution is believed to decrease inter-column gap width w and decrease intra-column porosity. Relative to a spray of coarse powder, the broader distribution spray is believed to increase the frequency of connected vertical porosity bands and cracks. Relative to a narrow distribution spray of some intermediate size of powder, the broader distribution spray is believed to be less sensitive to changes in distribution. A narrow distribution may be very sensitive to slight changes in the distribution (e.g., the D50 value), with a slight change causing loss of one of the low inter-column gap size, low intra-column porosity or low frequency of connected vertical porosity bands and cracks. The broader distribution may be much more robust against even larger shifts of one or both of the two modes causing loss of beneficial properties. As noted above, going to bimodality with a trough or lull around the transition size may further increase this robustness.

The exemplary blend is of powders of essentially like chemical composition (e.g., both nominally the same (e.g., 7YSZ or 8YSZ) and subject to standard commercial variance in exact composition) so as to produce a coating of essentially uniform composition over the relevant layer (e.g., similar to if sprayed from just one of the constituent powders but reflecting that standard commercial variation). An exemplary such variation on 8YSZ allows 7.0 to 9.0 weight percent yttria in zirconia.

Although the FIG. 3 embodiment reflects a 50:50 mixture of the two exemplary sources, other ratios are possible. At relatively higher loading of the fine particles, inter-column gap width may increase and fine intra-column porosity may increase. At relatively higher loading of coarse particles, inter-column gap frequency may decrease and intra-column porosity may decrease, reducing strain tolerance.

Example 2 (otherwise similar to Example 1): 25vol% of suspension with D10/50/90 = 0.28/0.992/3.22 micrometers and 75vol% of second suspension with D10/50/90 = 0.26/0.57/1.19 micrometers blended together prior to spraying. Particles from both suspensions are of an 8YSZ composition.

Example 3 (Otherwise similar to Example 1): 25vol% of suspension with D10/50/90 = 0.70/2.63/5.36 micrometers and 75vol% of second suspension with D10/50/90 = 0.22/0.50/0.99 micrometers blended together prior to spraying. Particles from both suspensions are of a gadolinia stabilized zirconia (GSZ) composition (59 weight percent gadolinia in zirconia).

Example 4 (co-sprayed from different injectors): one suspension with D10/50/90 = 0.54/1.78/3.69 micrometers and second suspension with D10/50/90 = 0.22/0.50/0.99 micrometers not pre-blended and instead injected into the plasma stream from two different injectors each at a feed rate of 45ml/min. Particles from both suspensions are of the Example 3 gadolinia stabilized zirconia (GSZ) composition.

The table below shows exemplary powder size ranges and associated weight percentages for the blend:

| Table I | | | | |
|---|---|---|---|---|
| Size | Wider Ranges | | Narrower Range | |
| (µm) | min | max | min | max |
| 0.818 and less | 42.9 | 70.3 | 45.7 | 63.5 |
| above 1.156 | 13.5 | 55.2 | 21.0 | 41.3 |
| 0.818-1.156 | 0.0 | 27.2 | 0.0 | 24.6 |

In the table, the wider ranges may coexist in one group of examples and the narrower ranges may coexist in another overlapped group. However, the wider range of one or two of the sizes may be combined with the narrower of two or one to bound other groups. Also, one end of a wide range may be paired with one end of a narrow range, and the like. As far as an upper limit on particle size, an exemplary value is 40 micrometers. Thus, the "above 1.156" values may also be used for such range extending to 40 micrometers. Similarly, although there is no practical limit on the low end, it is expected that essentially all will be at least 0.05 micrometers.

Although FIG. 3 involves 7YSZ for both the coarse and fine particles, alternative materials may be used for one or both. For example, gadolinia-containing materials. An exemplary gadolinia-containing material is a gadolinia stabilized zirconia (GSZ). The GSZ may have advantages of beneficial reaction with CMAS materials, to form precipitate 122 in FIG. 2A, and lower thermal conductivity as compared with YSZ, thus providing greater durability and thermal insulation. Also, GSZ has lower fracture toughness, allowing crack formation as discussed below.

Additionally, the possibility exists of using dissimilar materials for the coarse powder and fine powder (i.e., differing more in chemistry than normal commercial variations for a given nominal chemistry). Or in such mixture of different chemistries, one or both of the two chemistries may feature a bimodal or broadened distribution achieved through blending.

Examples of blends of dissimilar chemistries include combinations of YSZ and GdZ. For example, if combining YSZ and GdZ one could make YSZ the higher volume fraction so as to make this the more continuous phase for toughening (YSZ is more tough than GdZ). Combining YSZ with GdZ and/or Gd₂O₃, may increase rare earth content (due to Gd) to increase beneficial reaction rate with CMAS while maintaining toughness of YSZ (*see*, US patent application 15/449,129, "CERAMIC COATING DEPOSITION", filed March 3, 2017, (the '129 application). Also one may add GdAlO₃ (or the like) with YSZ or GdZ because GdAlO₃ has a chemical effect on densification during deposition (see, US patent application 15/699,265, "COATING WITH DENSE COLUMNS SEPARATED BY GAPS", filed September 8, 2017 (the '265 application)) .

As noted above, the bond coat may comprise or may consist essentially of one or more MCrAlY such as a CoNiCrAlYHfSi (e.g., PWA286 (see United States Patent No. 5,599,385)) deposited by LPPS, HVOF, or APS. HVOF offers ease of use (e.g., allowing sequential application of the bond coat and subsequent ceramic in the same chamber/booth and with the same gun). Durability of the bond coat may be further enhanced by diffusion heat treatment. In general, a rough finish bond coat is required for adherence of a powder sprayed (e.g., APS) ceramic. Such rough finish is provided by spray techniques such as LPPS or APS. HVOF is typically smoother than LPPS and APS. SPS ceramic may benefit from an intermediate roughness bond coat such as LPPS or cathodic arc which after surface treatment and grit blasting may be down to 50 to 150 Ra. HVOF offers ease of application. However the oxygen in the process may excessively increase TGO growth rate and thus speed failure.

Exemplary bond coat thickness is 10 micrometers to 500 micrometers, more particularly, 25 micrometers to 250 micrometers or 75 micrometers to 200 micrometers. Exemplary first coating layer 108 thickness is 5 micrometers to 150 micrometers, more particularly, 10 micrometers to 100 micrometers. An exemplary second coating layer 110 thickness is 50 micrometers to 1000 micrometers, more particularly, 75 micrometers to 500 micrometers.

There are numerous further variations on the coating process. Some of these involve additional layers. One example of an additional layer is a dense outer layer (e.g., with gap size less than 2 micrometers as is disclosed in US patent application 15/699,015, "MULTI LAYER CMAS RESISTANT THERMAL BARRIER COATING", filed September 8, 2017 (the '015 application). Substrate variations may include non-metallic substrates such as ceramic matrix composite (CMC) or monolithic ceramic substrates.

An example of an iterative optimization process may start with a baseline process. An exemplary baseline process is that of the '260 application. One optimization seeks to merely preserve the already-optimized coating structure and properties by altering distribution only to render the process more robust to variations (e.g., manufacturing variations in the powder). A distribution of the baseline powder may be determined such as by sieving. One example includes measuring to provide data corresponding to a plot as in FIG. 4. This may also include determinations of specific values such as D50, D10, D20, D80, D90, and the like.

To create a replacement distribution (e.g., broader and optionally bimodal), one may select two source powders: one substantially finer than the measured value (e.g., lower D50); and one substantially coarser. These two may be blended in proportion so as to reproduce the baseline coating. For example, the initial targeted blend might duplicate the D50 of the baseline while being broader (e.g., lower D20 and higher D80 or greater spread between such values) and optionally bimodal or more bimodal (lower and/or broader trough if the baseline has bimodality). Such initial candidate might be sprayed using the exact parameters of the baseline. The resulting coating may be sectioned/micrographed and/or subject to properties testing.

In an iterative process the blend may be optimized if needed. For example, if the coating applied from the blend exhibits properties associated with too fine (or coarse) a source material, the next iteration of the blend may be biased toward more of the coarse (or fine) material even if this causes D50 to increase (or decrease) relative to the baseline (or prior iteration of blend). Such iteration may include changing the proportions of the two source materials or selecting a different source material distribution for one or both of the sources.

Yet further variations include using more than two sources for the blend.

## Claims

1. A method for coating a substrate (100) of a gas turbine engine component, the method comprising:
suspension plasma spraying of a bimodal size distribution of a ceramic powder of essentially uniform chemical composition to form a first ceramic layer (110), the bimodal size distribution having a trough spanning a transition size for powder behavior of gas-flow trajectories of smaller particles and ballistic trajectories of larger particles; and
applying at least one additional ceramic layer (108) to the substrate (100) prior to said spraying,
wherein the applying at least one additional ceramic layer (108) comprises suspension plasma spraying a unimodal distribution of powder and the powder comprises particles of a lesser D50 size than a D50 size of the particles of the bimodal size distribution, wherein the first ceramic layer (110) is atop the additional ceramic layer (108), and
wherein the component optionally comprises a bond coat (104) atop an external surface (102) of the substrate (100), and the additional ceramic layer (108) is atop the bond coat (104).

2. The method of claim 1, wherein:
the bimodal distribution is in a common body of powder.

3. The method of claim 1 or 2, wherein:
the first ceramic layer (110) has a thickness of 50 micrometers to 1000 micrometers.

4. The method of claim 1, 2 or 3, wherein the bimodal distribution comprises by weight:
at least 42.9% at or below 0.818 micrometer;
at least 13.5% above 1.156 micrometer; and
no more than 27.2% between 0.818 micrometer and 1.156 micrometer.

5. The method of claim 4, wherein the bimodal distribution comprises by weight:
at least 45.7% at or below 0.818 micrometer;
at least 21.0% above 1.156 micrometer; and
no more than 24.6% between 0.818 micrometer and 1.156 micrometer.

6. The method of any preceding claim, further comprising:
applying the bond coat (104) to the substrate (100) prior to said spraying.

7. The method of any preceding claim, further comprising:
applying a top coat after said spraying.

8. The method of any preceding claim, wherein:
the at least one additional ceramic layer (108) is **characterized by** higher porosity than the first ceramic layer (110).

9. The method of any preceding claim, wherein:
the substrate (100) has an airfoil (22), the airfoil (22) having a leading edge (24), a trailing edge (26), a pressure side (28), and a suction side (30).

10. The method of any preceding claim, further comprising pre-blending the ceramic powder from at least two different size distributions.

11. The method of claim 10, wherein:
the pre-blending and the suspension plasma spraying are performed iteratively to balance powder behavior of gas-flow trajectories of smaller particles and ballistic trajectories of larger particles and limit sensitivity to compositional variations.

12. The method of claim 10 or 11, wherein the pre-blending is a blending of suspensions of respective powders.

13. The method of claim 10 or 11, wherein the pre-blending is a blending of respective powders prior to forming the suspension.

## Patentansprüche

1. Verfahren zum Beschichten eines Substrates (100) einer Gasturbinentriebwerkskomponente, wobei das Verfahren Folgendes umfasst:
Suspensionsplasmasprühen einer bimodalen Größenverteilung eines keramischen Pulvers einer im Wesentlichen einheitlichen chemischen Zusammensetzung, um eine erste keramische Schicht (110) zu bilden, wobei die bimodale Größenverteilung ein Tal aufweist, das eine Übergangsgröße für Pulververhalten von Gasströmungsflugbahnen von kleineren Teilchen und ballistischen Flugbahnen von größeren Teilchen überspannt; und
Aufbringen mindestens einer zusätzlichen keramischen Schicht (108) auf das Substrat (100) vor dem Sprühen,
wobei das Aufbringen der mindestens einen zusätzlichen keramischen Schicht (108) das Suspensionsplasmasprühen einer unimodalen Verteilung von Pulver umfasst und das Pulver Partikel einer kleineren D50-Größe als eine D50-Größe der Teilchen der bimodalen Größenverteilung umfasst, wobei die erste keramische Schicht (110) oben auf der zusätzlichen keramischen Schicht (108) liegt, und
wobei die Komponente optional einen Haftvermittler (104) oben auf einer äußeren Oberfläche (102) des Substrats (100) umfasst, und die zusätzliche keramische Schicht (108) oben auf dem Haftvermittler (104) liegt.

2. Verfahren nach Anspruch 1, wobei:
die bimodale Verteilung in einem gemeinsamen Pulverkörper vorliegt.

3. Verfahren nach Anspruch 1 oder 2, wobei:
die erste keramische Schicht (110) eine Dicke von 50 Mikrometer bis 1000 Mikrometer aufweist.

4. Verfahren nach Anspruch 1, 2 oder 3, wobei die bimodale Verteilung dem Gewicht nach Folgendes umfasst:
mindestens 42,9 % mit oder unter 0,818 Mikrometer;
mindestens 13,5 % über 1,156 Mikrometer; und
nicht mehr als 27,2 % zwischen 0,818 Mikrometer und 1,156 Mikrometer.

5. Verfahren nach Anspruch 4 , wobei die bimodale Verteilung dem Gewicht nach Folgendes umfasst:
mindestens 45,7 % mit oder unter 0,818 Mikrometer;
mindestens 21,0 % über 1,156 Mikrometer; und
nicht mehr als 24,6 % zwischen 0,818 Mikrometer und 1,156 Mikrometer.

6. Verfahren nach einem der vorstehenden Ansprüche, ferner Folgendes umfassend:
Aufbringen des Haftvermittlers (104) auf das Substrat (100) vor dem Sprühen.

7. Verfahren nach einem der vorstehenden Ansprüche, ferner Folgendes umfassend:
Aufbringen einer Deckschicht nach dem Sprühen.

8. Verfahren nach einem der vorstehenden Ansprüche, wobei:
die mindestens eine zusätzliche keramische Schicht (108) durch eine höhere Porosität als die erste keramische Schicht (110) gekennzeichnet ist.

9. Verfahren nach einem der vorstehenden Ansprüche, wobei:
das Substrat (100) ein Schaufelprofil (22) aufweist, wobei das Schaufelprofil (22) eine Vorderkante (24), eine Hinterkante (26), eine Druckseite (28) und eine Saugseite (30) aufweist.

10. Verfahren nach einem der vorstehenden Ansprüche, ferner das Vormischen des keramischen Pulvers aus mindestens zwei verschiedenen Größenverteilungen umfassend.

11. Verfahren nach Anspruch 10, wobei:
das Vormischen und das Suspensionsplasmasprühen iterativ durchgeführt werden, um ein Pulververhalten von Gasströmungsflugbahnen kleinerer Teilchen und ballistischer Flugbahnen größerer Teilchen auszugleichen und die Empfindlichkeit gegenüber Zusammensetzungsabweichungen einzuschränken.

12. Verfahren nach Anspruch 10 oder 11, wobei das Vormischen ein Mischen von Suspensionen jeweiliger Pulver ist.

13. Verfahren nach Anspruch 10 oder 11, wobei das Vormischen ein Mischen jeweiliger Pulver vor dem Herstellen der Suspension ist.

## Revendications

1. Procédé de revêtement d'un substrat (100) d'un composant de moteur à turbine à gaz, le procédé comprenant :
la pulvérisation de plasma en suspension d'une distribution granulométrique bimodale d'une poudre de céramique de composition chimique essentiellement uniforme pour former une première couche de céramique (110), la distribution granulométrique bimodale ayant un creux couvrant une taille de transition pour le comportement de la poudre de trajectoires d'écoulement de gaz de particules plus petites et de trajectoires balistiques de particules plus grosses ; et
l'application d'au moins une couche de céramique supplémentaire (108) sur le substrat (100) avant ladite pulvérisation,
dans lequel l'application d'au moins une couche de céramique supplémentaire (108) comprend la pulvérisation de plasma en suspension d'une distribution unimodale de poudre et la poudre comprend des particules d'une taille D50 inférieure à une taille D50 des particules de la distribution granulométrique bimodale,
dans lequel la première couche de céramique (110) est au-dessus de la couche de céramique supplémentaire (108), et
dans lequel le composant comprend éventuellement une couche de liaison (104) au-dessus d'une surface externe (102) du substrat (100), et la couche de céramique supplémentaire (108) est au-dessus de la couche de liaison (104).

2. Procédé selon la revendication 1, dans lequel :
la distribution bimodale est dans un corps de poudre commun.

3. Procédé selon la revendication 1 ou 2, dans lequel :
la première couche de céramique (110) a une épaisseur comprise entre 50 micromètres et 1 000 micromètres.

4. Procédé selon la revendication 1, 2 ou 3, dans lequel la distribution bimodale comprend en poids :
au moins 42,9 % à 0,818 micromètre ou en dessous ;
au moins 13,5 % au-dessus de 1,156 micromètre ; et
pas plus de 27,2 % entre 0,818 micromètre et 1,156 micromètre.

5. Procédé selon la revendication 4, dans lequel la distribution bimodale comprend en poids :
au moins 45,7 % à 0,818 micromètre ou en dessous ;
au moins 21,0 % au-dessus de 1,156 micromètre ; et
pas plus de 24,6 % entre 0,818 micromètre et 1,156 micromètre.

6. Procédé selon une quelconque revendication précédente, comprenant en outre :
l'application de la couche de liaison (104) sur le substrat (100) avant ladite pulvérisation.

7. Procédé selon une quelconque revendication précédente, comprenant en outre :
l'application d'une couche supérieure après ladite pulvérisation.

8. Procédé selon une quelconque revendication précédente, dans lequel :
l'au moins une couche de céramique supplémentaire (108) est **caractérisée par** une porosité supérieure à celle de la première couche de céramique (110).

9. Procédé selon une quelconque revendication précédente, dans lequel :
le substrat (100) a un profil aérodynamique (22), le profil aérodynamique (22) ayant un bord d'attaque (24), un bord de fuite (26), un intrados (28) et un extrados (30).

10. Procédé selon une quelconque revendication précédente, comprenant en outre le pré-mélange de la poudre de céramique à partir d'au moins deux distributions granulométriques différentes.

11. Procédé selon la revendication 10, dans lequel :
le pré-mélange et la pulvérisation de plasma en suspension sont effectués de manière itérative pour équilibrer le comportement de la poudre de trajectoires d'écoulement de gaz de particules plus petites et de trajectoires balistiques de particules plus grosses et pour limiter la sensibilité aux variations de composition.

12. Procédé selon la revendication 10 ou 11, dans lequel le pré-mélange est un mélange de suspensions de poudres respectives.

13. Procédé selon la revendication 10 ou 11, dans lequel le pré-mélange est un mélange de poudres respectives avant la formation de la suspension.
